# EUROPEAN PATENT APPLICATION

(11) **EP 4 576 861 A1**
(43) Date of publication of application: **25.06.2025**
(21) Application number: 23870592.5
(22) Date of filing: 21.09.2023
(51) Int. Cl.: H04W 24/02

(54) **COMMUNICATION METHOD AND COMMUNICATION APPARATUS**

(30) Priority: 30.09.2022 CN 202211214639
(71) Applicant: Huawei Technologies Co., Ltd., Shenzhen, Guangdong 518129 (CN)
(72) Inventor: ZHANG, Xudong, Shenzhen, Guangdong 518129 (CN); WANG, Yali, Shenzhen, Guangdong 518129 (CN); WANG, Jian, Shenzhen, Guangdong 518129 (CN)
(74) Representative: Goddar, Heinz J.
(86) International application number: PCT/CN2023/120484
(87) International publication number: WO 2024/067360

(57) **Abstract**

This application provides a communication method and a communication apparatus, applied to a multi-hop network, so that a node in the multi-hop network can obtain an adjacency relationship thereof, thereby helping improve communication efficiency. The method may include: A first node obtains network topology configuration information, where the network topology configuration information includes a node identity, a node type, and network topology information; the first node receives a first message, where the first message includes a node identity of a second node; obtains network configuration information of the second node based on the network topology configuration information; and sends a second message, where the second message includes the network configuration information of the second node, where the network configuration information of the second node indicates: a node type of the second node, an adjacent node of the second node, and a node type of the adjacent node of the second node. The network configuration information of the second node is used to configure an adjacency relationship of the second node, so that the second node obtains the adjacency relationship thereof.

## Description

This application claims priority to Chinese Patent Application No. 202211214639.0, filed with the China National Intellectual Property Administration on September 30, 2022 and entitled "COMMUNICATION METHOD AND COMMUNICATION APPARATUS", which is incorporated herein by reference in its entirety.

### TECHNICAL FIELD

This application relates to the field of wireless communication technologies, and in particular, to a communication method and a communication apparatus.

### BACKGROUND

With continuous development of wireless communication technologies, there are a wireless battery management system (battery management system, BMS), a sensor network, and smart application scenarios such as smart home, smart cockpit, smart driving, smart manufacturing, and smart transportation. A smart home scenario is used as an example. The smart home scenario may include at least one communication domain, and one communication domain may include a plurality of nodes (for example, one primary node and at least one secondary node). A network topology structure of the communication domain may be a single-hop network or a multi-hop network.

The single-hop network includes a primary node and at least one secondary node connected to the primary node. In the single-hop network, two nodes may negotiate node types, to be specific, negotiate which node is a primary node and which node is a secondary node, so as to establish an adjacency relationship between the two nodes.

In the multi-hop network, a communication manner between one node and another node may be a communication manner without using other nodes, or may be a communication manner in which forwarding is performed by using at least one another node. Compared with the single-hop network, the multi-hop network has more nodes and more complex topology relationships. Therefore, a manner of establishing an adjacency relationship in the single-hop network is not applicable to the multi-hop network. Therefore, in the multi-hop network, how a node obtains an adjacency relationship thereof is a technical problem to be urgently resolved.

### SUMMARY

Embodiments of this application provide a communication method and a communication apparatus, so that a node can obtain an adjacency relationship thereof, thereby helping improve communication efficiency.

According to a first aspect, this application provides a communication method. The method may be performed by a first node, or may be performed by an apparatus in the first node, for example, a processor, a chip, or a chip system. The method may include: The first node obtains network topology configuration information, where the network topology configuration information includes a node identity, a node type, and network topology information; receives a first message, where the first message includes a node identity of a second node; obtains network configuration information of the second node based on the network topology configuration information; and sends a second message, where the second message includes the network configuration information of the second node, where
the network configuration information of the second node indicates: a node type of the second node, an adjacent node of the second node, and a node type of the adjacent node of the second node.

It may be understood that the network configuration information of the second node is used to configure an adjacency relationship of the second node, and the adjacency relationship may include the node identity of the second node, the node type of the second node, a node identity of the adjacent node of the second node, and the node type of the adjacent node of the second node.

It can be learned that, when receiving the node identity of the second node, the first node may feed back the network configuration information of the second node to the second node based on the network topology configuration information, so that the second node can obtain the adjacency relationship thereof. Compared with a case that the second node negotiates node types with adjacent nodes thereof one by one to determine the adjacency relationship, this saves time and improves communication efficiency.

Optionally, the second node and the adjacent node of the second node are of different node types, so as to improve stability of a network topology.

In a possible implementation, that the first node receives a first message includes: The first node receives the first message from the second node. That the first node sends a second message includes: The first node sends the second message to the second node. In this manner, the first node may directly communicate with the second node, without forwarding by using another node. Therefore, an adjacent node of the first node may directly obtain respective network configuration information from the first node, thereby helping reduce radio resource overheads.

Optionally, before the first node receives the first message, the first node sends a broadcast message, where the broadcast message indicates that the first node has a network topology configuration capability. Therefore, the second node that receives the broadcast message may obtain the network configuration information of the second node from the first node, which helps save time. Specifically, the network topology configuration capability refers to a capability of configuring network configuration information for another node and providing the network configuration information for the another node.

In another possible implementation, that the first node receives a first message includes: The first node receives the first message from the second node by using a routing node. That the first node sends a second message includes: The first node sends the second message to the second node by using the routing node. In this manner, communication between the first node and the second node is forwarded by using the routing node. Therefore, a node other than the adjacent node of the first node may obtain respective network configuration information from the first node by using the routing node, so as to expand the network topology.

In a possible implementation, after the first node sends the second message, the first node may receive a third message from a third node by using the second node, where the third message includes a node identity of the third node; the first node performs secure access authentication on the third node, where the node identity of the third node is not included in the network topology configuration information; and when the secure access authentication succeeds on the third node, the first node sends a fourth message to the third node by using the second node, where the fourth message includes network configuration information of the third node. It can be learned that the second node has a network topology configuration forwarding capability, so that the third node can obtain the network configuration information of the third node from the first node by using the second node. When the third node is not included in the network topology configuration information, it indicates that the third node is not in a planned network topology. Even if a node that is not in the planned network topology can obtain network configuration information from the first node by using the routing node, so that the network topology can be expanded, and flexibility of the network topology can be improved. The network topology configuration forwarding capability means that network configuration information fed back by the first node for another node can be forwarded to the another node, and a node identity of the another node can also be forwarded to the first node.

According to a second aspect, this application provides a communication method. The method may be performed by a second node, or may be performed by an apparatus in the second node, for example, a processor, a chip, or a chip system. The method may include: The second node sends a first message, where the first message includes a node identity of the second node; and the second node receives a second message, where the second message includes network configuration information of the second node, where
the network configuration information of the second node indicates: a node type of the second node, an adjacent node of the second node, and a node type of the adjacent node of the second node.

It may be understood that the network configuration information of the second node is used to configure an adjacency relationship of the second node, and the adjacency relationship may include the node identity of the second node, the node type of the second node, a node identity of the adjacent node of the second node, and the node type of the adjacent node of the second node.

It can be learned that the second node obtains the adjacency relationship of the second node by sending the node identity thereof. Compared with a case that the second node negotiates node types with adjacent nodes thereof one by one to determine the adjacency relationship, this saves time and improves communication efficiency.

Optionally, the second node and the adj acent node of the second node are of different node types, so as to improve stability of a network topology.

In a possible implementation, that the second node sends a first message includes: The second node sends the first message to a first node. That the second node receives a second message includes: The second node receives the second message from the first node. In this manner, the second node may directly communicate with the first node, without forwarding by using another node. Therefore, an adjacent node of the first node may directly obtain respective network configuration information from the first node, thereby helping reduce radio resource overheads.

Optionally, before the second node sends the first message, the second node receives a broadcast message from the first node, where the broadcast message indicates that the first node has a network topology configuration capability. Therefore, the second node may obtain the network configuration information of the second node from the first node, which helps save time.

Optionally, before the second node receives the broadcast message from the first node, the second node discovers the first node by using a node discovery mechanism. The node discovery mechanism may be as follows: A node 1, as a discovered party, sends a system message or a broadcast message in a broadcast manner, and a node 2 receives the system message or the broadcast message by scanning. Then, it may be determined that the node 2 discovers the node 1.

In another possible implementation, that the second node sends a first message includes: The second node sends the first message to a first node by using a routing node. That the second node receives a second message includes: The second node receives the second message from the first node by using the routing node. In this manner, communication between the second node and the first node is forwarded by using the routing node. Therefore, a node other than the adjacent node of the first node may obtain respective network configuration information from the first node by using the routing node, so as to expand the network topology.

Optionally, before the second node sends the first message, the second node receives a broadcast message from a routing node, where the broadcast message indicates that the routing node has a network topology configuration forwarding capability. Therefore, the second node may obtain the network configuration information of the second node from the first node by using the routing node, so as to expand the network topology.

Optionally, before the second node receives the broadcast message from the routing node, the second node discovers the routing node by using a node discovery mechanism.

In a possible implementation, when receiving the network configuration information of the second node, the second node may manage an adjacency relationship of the second node based on the network configuration information of the second node. Managing the adjacency relationship of the second node may include establishing a first adjacency relationship of the second node, and/or disconnecting a second adjacency relationship of the second node. The first adjacency relationship is an adjacency relationship indicated by the network configuration information of the second node. The second adjacency relationship is an adjacency relationship not indicated by the network configuration information of the second node. The second node manages the adjacency relationship thereof, so that the second node runs in the network topology with the adjacency relationship, which helps improve communication efficiency.

In a possible implementation, when receiving the network configuration information of the second node, the second node may update the node type of the second node based on the network configuration information of the second node. Therefore, the second node runs in the network topology with an updated node type, which helps improve stability of the network topology.

In a possible implementation, after the second node receives the second message, the second node receives a third message from a third node, where the third message includes a node identity of the third node; the second node sends the node identity of the third node to the first node; the second node receives a fourth message from the first node, where the fourth message includes network configuration information of the third node; and sends the network configuration information of the third node to the third node. It can be learned that the second node has the network topology configuration forwarding capability, so that the third node can obtain the network configuration information of the third node from the first node by using the second node, to expand the network topology.

In another possible implementation, after the second node receives the second message, the second node receives a third message from a third node, where the third message includes a node identity of the third node; and the second node sends a fourth message to the third node, where the fourth message indicates that the second node does not have a network topology configuration forwarding capability. It can be learned that when the second node does not have the network topology configuration forwarding capability, the second node does not forward the node identity of the third node. In this way, a boundary range of the network topology can be effectively controlled.

According to a third aspect, this application provides a communication method. The method may be performed by a first node, or may be performed by an apparatus in the first node, for example, a processor, a chip, or a chip system. The method may include: The first node obtains a network topology construction rule, where the network topology construction rule indicates a rule that a first hop count and a second hop count need to meet, the first hop count is a minimum hop count from the first node to a second node in a network topology, and the second hop count is a minimum hop count from the first node to a third node in the network topology; and the first node broadcasts a network path probe packet, where the network path probe packet is used to probe and carry a hop count between nodes.

The second node and the third node may be any two adjacent nodes configured to construct a network topology. The network topology construction rule may indicate a rule for establishing an adjacency relationship between any two adjacent nodes, so as to construct a network topology.

It can be learned that the first node obtains the rule that the first hop count and the second hop count need to meet, so that the node can dynamically obtain the adjacency relationship based on the network probe packet, thereby dynamically constructing the network topology, improving flexibility of the network topology, and improving communication efficiency.

In a possible implementation, the network topology construction rule is further used to indicate a rule that a node identity of the second node and a node identity of the third node need to meet.

In a possible implementation, the first node broadcasts the network topology construction rule, so that a node that receives the rule can establish an adjacency relationship with an adjacent node thereof according to the rule.

In a possible implementation, the first node periodically broadcasts the network path probe packet, to dynamically construct the network topology.

According to a fourth aspect, this application provides a communication method. The method may be performed by a second node, or may be performed by an apparatus in the second node, for example, a processor, a chip, or a chip system. The method may include: The second node receives a network path probe packet from a first node; updates a first hop count based on the network path probe packet, where the first hop count is a minimum hop count from the first node to the second node; the second node obtains a second hop count from a third node, where the second hop count is a minimum hop count from the first node to the third node; and determines a node type of the second node and a node type of the third node based on the first hop count and the second hop count.

It can be learned that the second node determines the node type of the second node and the node type of the third node based on the first hop count and the second hop count, so as to establish an adjacency relationship between the second node and the third node, thereby helping improve communication efficiency.

Optionally, the first hop count is locally maintained by the second node. That is, the first hop count is a minimum hop count locally recorded by the second node, so that the second node updates the first hop count based on the received network probe packet. Therefore, the second node may dynamically establish an adjacency relationship thereof, which helps improve flexibility of a network topology.

In a possible implementation, that the second node determines a node type of the second node and a node type of the third node based on the first hop count and the second hop count may include: If the first hop count is less than the second hop count, the second node determines that the node type of the second node is a first type and the node type of the third node is a second type; or if the first hop count is greater than the second hop count, the second node determines that the node type of the second node is a second type and the node type of the third node is a first type, where the first type is different from the second type. It can be learned that, the second node determines the node type of the second node and the node type of the third node by comparing sizes of the first hop count with the second hop count, so as to establish the adjacency relationship between the second node and the third node.

In another possible implementation, if the first hop count is equal to the second hop count, and that the second node determines a node type of the second node and a node type of a third node based on the first hop count and the second hop count may include: The second node determines the node type of the second node and the node type of the third node according to a preset rule, where the preset rule is related to a size of a node identity.

In a possible implementation, before the second node updates the first hop count based on the network path probe packet, the second node sends a first broadcast message, where the first broadcast message includes the node identity of the second node; receives a second broadcast message from the third node, where the second broadcast message includes a node identity of the third node; and determines an initial node type of the second node and an initial node type of the third node based on the node identity of the second node and the node identity of the third node. It can be learned that the second node determines the initial node type of the second node and the initial node type of the third node by using the node identity of the second node and the node identity of the second node, so as to establish an initial adjacency relationship between the second node and the third node. The initial adjacency relationship is not fixed, and may be replaced by the adjacency relationship determined based on the first hop count and the second hop count, so as to dynamically establish the adjacency relationship.

Further, that the second node determines an initial node type of the second node and an initial node type of the third node based on the node identity of the second node and the node identity of the third node may include: If the node identity of the second node is less than the node identity of the third node, the second node determines that the initial node type of the second node is a first type and the initial node type of the third node is a second type; or if the node identity of the second node is greater than the node identity of the third node, the second node determines that the initial node type of the second node is a second type and the initial node type of the third node is a first type, where the first type is different from the second type. It can be learned that the second node determines the initial node type of the second node and the initial node type of the third node by comparing sizes of the node identities, so as to establish the initial adjacency relationship between the second node and the third node.

In a possible implementation, if an updated first hop count based on the network path probe packet is less than the first hop count before the update, the second node sends a first network path probe packet to a fourth node, where a hop count in the first network path probe packet is a third hop count, and a difference between the third hop count and the updated first hop count is a preset value. Therefore, the network topology is updated, helping improve flexibility of the network topology. Specifically, the preset value may be 1.

In a possible implementation, the second node obtains duration in which the node type of the second node is the first type, and if the duration is greater than preset duration, the second node maintains the node type of the second node as the first type. This reduces traffic loss caused by frequent node type switching.

According to a fifth aspect, this application provides a communication apparatus. The communication apparatus includes modules or units configured to perform the method according to any one of the first aspect to the fourth aspect.

In a possible design, the communication apparatus includes:
a processing unit, configured to obtain network topology configuration information, where the network topology configuration information includes a node identity, a node type, and network topology information; and
a communication unit, configured to receive a first message, where the first message includes a node identity of a second node;
the processing unit is further configured to obtain network configuration information of the second node based on the network topology configuration information; and
the communication unit is further configured to send a second message, where the second message includes the network configuration information of the second node, where
the network configuration information of the second node indicates: a node type of the second node, an adjacent node of the second node, and a node type of the adjacent node of the second node.

Optionally, the second node and the adjacent node of the second node are of different node types.

Optionally, the communication unit is specifically configured to: receive the first message from the second node, and send the second message to the second node.

Optionally, the communication unit is further configured to send a broadcast message, where the broadcast message indicates that the first node has a network topology configuration capability.

Optionally, the communication unit is specifically configured to: receive the first message from the second node by using a routing node; and send the second message to the second node by using the routing node.

Optionally, the communication unit is further configured to receive a third message from a third node by using the second node, where the third message includes a node identity of the third node;
the processing unit is further configured to perform secure access authentication on the third node, where the node identity of the third node is not included in the network topology configuration information; and
the communication unit is further configured to: when the secure access authentication succeeds on the third node, send a fourth message to the third node by using the second node, where the fourth message includes network configuration information of the third node.

For technical effect brought by the fifth aspect or any possible implementation, refer to descriptions of the technical effect corresponding to the first aspect or the corresponding implementations.

In another possible design, the communication apparatus includes:
a communication unit, configured to: send a first message, where the first message includes a node identity of a second node; and receive a second message, where the second message includes network configuration information of the second node, where
the network configuration information of the second node indicates: a node type of the second node, an adjacent node of the second node, and a node type of the adjacent node of the second node.

Optionally, the second node and the adjacent node of the second node are of different node types.

Optionally, the communication unit is specifically configured to: send the first message to a first node; and receive the second message from the first node.

Optionally, the communication unit is further configured to receive a broadcast message from the first node, where the broadcast message indicates that the first node has a network topology configuration capability.

Optionally, the communication unit is specifically configured to: send the first message to a first node by using a routing node; and receive the second message from the first node by using the routing node.

Optionally, the communication unit is further configured to receive a broadcast message from a routing node, where the broadcast message indicates that the routing node has a network topology configuration forwarding capability.

Optionally, the communication apparatus further includes a processing unit, configured to manage an adjacency relationship of the second node based on the network configuration information of the second node.

Optionally, the processing unit is further configured to update the node type of the second node based on the network configuration information of the second node.

Optionally, the communication unit is further configured to: receive a third message from a third node, where the third message includes a node identity of the third node; send the node identity of the third node to the first node; receive a fourth message from the first node, where the fourth message includes network configuration information of the third node; and send the network configuration information of the third node to the third node.

Optionally, the communication unit is further configured to: receive a third message from a third node, where the third message includes a node identity of the third node; and send a fourth message to the third node, where the fourth message indicates that the second node does not have a network topology configuration forwarding capability.

For technical effect brought by the fifth aspect or any possible implementation, refer to descriptions of the technical effect corresponding to the second aspect or the corresponding implementations.

In still another possible design, the communication apparatus includes:
a processing unit, configured to: obtain a network topology construction rule, where the network topology construction rule indicates a rule that a first hop count and a second hop count need to meet, the first hop count is a minimum hop count from the first node to a second node in a network topology, and the second hop count is a minimum hop count from the first node to a third node in the network topology; and
a communication unit, configured to broadcast a network path probe packet, where the network path probe packet is used to probe and carry a hop count between nodes.

Optionally, the network topology construction rule is further used to indicate a rule that a node identity of the second node and a node identity of the third node need to meet.

Optionally, the communication unit is further configured to broadcast the network topology construction rule.

For technical effect brought by the fifth aspect or any possible implementation, refer to descriptions of the technical effect corresponding to the third aspect or the corresponding implementations.

In still another possible design, the communication apparatus includes:
a communication unit, configured to receive a network path probe packet from a first node; and
a processing unit, configured to update a first hop count based on the network path probe packet, where the first hop count is a minimum hop count from the first node to the second node;
the communication unit is further configured to obtain a second hop count from a third node, where the second hop count is a minimum hop count from the first node to the third node; and
the processing unit is further configured to determine a node type of the second node and a node type of the third node based on the first hop count and the second hop count.

Optionally, the processing unit is specifically configured to: if the first hop count is less than the second hop count, determine that the node type of the second node is a first type and the node type of the third node is a second type; or if the first hop count is greater than the second hop count, determine that the node type of the second node is a second type and the node type of the third node is a first type, where the first type is different from the second type.

Optionally, if the first hop count is equal to the second hop count, the processing unit is specifically configured to determine the node type of the second node and the node type of the third node according to a preset rule, where the preset rule is related to a size of a node identity.

Optionally, the communication unit is further configured to: send a first broadcast message, where the first broadcast message includes a node identity of the second node; and receive a second broadcast message from the third node, where the second broadcast message includes a node identity of the third node; and
the processing unit is further configured to determine an initial node type of the second node and an initial node type of the third node based on the node identity of the second node and the node identity of the third node.

Optionally, the processing unit is specifically configured to: if the node identity of the second node is less than the node identity of the third node, determine that the initial node type of the second node is a first type and the initial node type of the third node is a second type; or if the node identity of the second node is greater than the node identity of the third node, determine that the initial node type of the second node is a second type and the initial node type of the third node is a first type, where the first type is different from the second type.

Optionally, if an updated first hop count based on the network path probe packet is less than the first hop count before the update, the communication unit is further configured to send a first network path probe packet to a fourth node, where a hop count in the first network path probe packet is a third hop count, and a difference between the third hop count and the updated first hop count is a preset value.

Optionally, the processing unit is further configured to: obtain duration in which the node type of the second node is the first type, and if the duration is greater than preset duration, maintain the node type of the second node as the first type.

For technical effect brought by the fifth aspect or any possible implementation, refer to descriptions of the technical effect corresponding to the fourth aspect or the corresponding implementations.

According to a sixth aspect, an embodiment of this application provides a communication apparatus, including a processor. The processor is coupled to a memory, and may be configured to execute instructions in the memory, to implement the method according to any one of the first aspect to the fourth aspect and any one of the possible implementations. Optionally, the communication apparatus further includes the memory. Optionally, the communication apparatus further includes a communication interface, and the processor is coupled to the communication interface.

According to a seventh aspect, an embodiment of this application provides a communication apparatus, including a logic circuit and a communication interface. The communication interface is configured to: receive information or send information. The logic circuit is configured to: receive information or send information through the communication interface, so that the communication apparatus performs the method according to any one of the first aspect to the fourth aspect and any one of the possible implementations.

According to an eighth aspect, an embodiment of this application provides a computer-readable storage medium. The computer-readable storage medium is configured to store a computer program (which may also be referred to as code or instructions). When the computer program is run on a computer, the method according to any one of the first aspect to the fourth aspect and any one of the possible implementations is implemented.

According to a ninth aspect, an embodiment of this application provides a computer program product. The computer program product includes a computer program (which may also be referred to as code or instructions). When the computer program is run, the computer is enabled to perform the method according to any one of the first aspect to the fourth aspect and any one of the possible implementations.

According to a tenth aspect, an embodiment of this application provides a chip. The chip includes a processor, and the processor is configured to execute instructions. When the processor executes the instructions, the chip is enabled to perform the method according to any one of the first aspect to the fourth aspect and any one of the possible implementations. Optionally, the chip further includes a communication interface, and the communication interface is configured to: receive a signal or send a signal.

According to an eleventh aspect, an embodiment of this application provides a terminal device. The terminal device includes at least one of the communication apparatus in the fifth aspect, the communication apparatus in the sixth aspect, the communication apparatus in the seventh aspect, or the chip in the tenth aspect.

According to a twelfth aspect, an embodiment of this application provides a system. The system includes a terminal device and at least one of the communication apparatus in the fifth aspect, the communication apparatus in the sixth aspect, the communication apparatus in the seventh aspect, or the chip in the tenth aspect.

In addition, in a process of performing the method according to any one of the first aspect to the fourth aspect and any one of the possible implementations, a process related to sending information, receiving information, and/or the like in the method may be understood as a process of outputting information by a processor and/or a process of receiving input information by the processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

Based on the foregoing principle, for example, sending information in the foregoing method may be understood as outputting information by the processor. For another example, receiving information may be understood as receiving input information by the processor.

Optionally, operations such as transmission, sending, and receiving related to the processor may be more generally understood as operations such as output, receiving, and input of the processor, unless otherwise specified, or provided that the operations do not contradict actual functions or internal logic of the operations in related descriptions.

Optionally, in a process of performing the method according to any one of the first aspect to the fourth aspect and any one of the possible implementations, the processor may be a processor specially configured to perform the method, or may be a processor that performs the method by executing computer instructions in a memory, for example, a general-purpose processor. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

In a possible implementation, the at least one memory is located outside an apparatus.

In another possible implementation, the at least one memory is located in an apparatus.

In still another possible implementation, some memories in the at least one memory are located in an apparatus, and the other memories are located outside the apparatus.

In this application, the processor and the memory may alternatively be integrated into one component. In other words, the processor and the memory may alternatively be integrated together.

### BRIEF DESCRIPTION OF DRAWINGS

FIG. 1 is an example diagram of several topology structures of a communication domain;
FIG. 2 is an example diagram of a wireless BMS scenario;
FIG. 3 is an example diagram of a smart home scenario;
FIG. 4 is an example diagram of a structure of a network topology of a multi-hop network according to this application;
FIG. 5 is a diagram of a possible wireless communication system according to this application;
FIG. 6 is a schematic flowchart of a communication method according to this application;
FIG. 6A shows network topology configuration information presented in a form of a tree diagram;
FIG. 6B is an example diagram of the embodiment shown in FIG. 6;
FIG. 7 is a schematic flowchart of another communication method according to this application;
FIG. 7A is an example diagram of the embodiment shown in FIG. 7;
FIG. 8 is a schematic flowchart of still another communication method according to this application;
FIG. 9 is a diagram of a structure of a communication apparatus according to an embodiment of this application;
FIG. 10 is a diagram of a structure of a communication apparatus according to an embodiment of this application; and
FIG. 11 is a diagram of a structure of a chip according to an embodiment of this application.

### DESCRIPTION OF EMBODIMENTS

In this application, terms such as "first" and "second" are used for distinguishing between same items or similar items that have basically same functions and roles. A person skilled in the art may understand that the terms such as "first" and "second" do not limit a quantity or an execution sequence, and the terms such as "first" and "second" do not indicate a definite difference. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

It should be understood that in this application, "at least one" means one or more, and "a plurality of" means two or more. In addition, "equal to" in this application may be used together with "greater than", or may be used together with "less than." When "equal to" and "greater than" are used together, a technical solution of "greater than" is used. When "equal to" and "less than" are used together, a technical solution of "less than" is used.

First, related names or terms in this application are described, to facilitate understanding by a person skilled in the art.

### 1. Node (node)

A node is an electronic device having a communication capability, and is also referred to as a communication node. For example, the node may include an independent device like a handheld terminal, a vehicle, a vehicle-mounted device, a network side device, user equipment, an access terminal, a subscriber unit, a subscriber station, a mobile station, a mobile console, a remote station, a remote terminal, a wireless communication device, a user agent, or a user apparatus; or may be a part (for example, a chip or an integrated circuit) included in an independent device. The node may be any possible smart terminal device (for example, a mobile phone), a smart transportation device (for example, a vehicle or an unmanned aerial vehicle), a smart manufacturing device, a smart home device (for example, a large screen, a sound box, or a printer), or the like.

For example, when the node is a vehicle-mounted device, the node may be a cockpit (cockpit domain) device or a module in a cockpit device, for example, one or more of modules such as a cockpit domain controller (cockpit domain controller, CDC), a camera, a screen, a microphone, a stereo, an electronic key, and a passive entry passive start system controller. In a vehicle, the node may alternatively be a wireless battery management system (wireless battery management system, wBMS), a battery management unit (battery management unit, BMU) in the wBMS, or the like.

For example, when the node is a handheld terminal, the node may be a mobile phone (mobile phone), a wearable device, a tablet computer (pad), a computer (such as a notebook computer or a palmtop computer) with a data receiving and sending function, or the like.

The node in this application may be applied to a plurality of application scenarios, for example, the following application scenarios: mobile internet (mobile internet, MI), industrial control (industrial control), self driving (self driving), transportation safety (transportation safety), internet of things (internet of things, IoT), smart city (smart city), or smart home (smart home).

The node in this application may be applied to a plurality of network types, for example, applied to one or more of the following network types: SparkLink (SparkLink), a long term evolution (long term evolution, LTE) network, a fifth generation mobile communication technology (5^{th}-generation mobile communication technology, 5G), a wireless local area network (for example, Wi-Fi), Bluetooth (Bluetooth, BT), Zigbee (Zigbee), or a vehicle-mounted short-range wireless communication network.

In some application scenarios or some network types, a name of a device having a similar communication capability may not be referred to as a node. However, for ease of description, devices having communication capabilities are collectively referred to as nodes in embodiments of this application.

### 2. Node type

The node type is used to describe a type of a node. The node type may also be described as a node identity, a node role, or the like. In embodiments of this application, node types are classified into a first type, a second type, and a third type.

A node of the first type may be referred to as a grant (grant, G) node, a G node, a control node, or the like. In embodiments of this application, an example in which the node of the first type is referred to as a G node is used.

A node of the second type may be referred to as a terminal (terminal, T), a T node, or the like. In embodiments of this application, an example in which the node of the second type is referred to as a T node is used.

A node of the third type may be referred to as a dual-identity node, a dual-role node, a G(T) node, or the like. In embodiments of this application, an example in which the node of the third type is referred to as a G(T) node is used. The G(T) node has functions of both a G node and a T node.

The T node may be connected to the G node or the G(T) node. When a G(T) node is used as a T node, the G(T) node may be connected to a G node. When a G(T) node is used as a G node, the G(T) node may be connected to a T node.

In embodiments of this application, a G node, a T node, and a G(T) node are used as an example. With development of a short-range wireless communication technology or a SparkLink technology, the G node, the T node, and the G(T) node may use other names.

### 3. Communication domain

A communication system (for example, a SparkLink communication system) usually includes a plurality of nodes, and the nodes may communicate with each other to transmit data. A vehicle-mounted communication system is used as an example. There may be a plurality of communication domains in a vehicle. The communication domain is a system including a group of nodes having a communication relationship and a communication connection relationship (namely, a communication link) between the nodes, and is usually used to complete a specific function. For example, one communication domain may include one primary node and at least one secondary node, and communication may be performed between the primary node and the secondary node, or between primary nodes, or between secondary nodes. The primary node may manage the secondary node, has a function of allocating a resource, and is responsible for allocating a resource to the secondary node. The secondary node is scheduled by the primary node, and communicates with the primary node and/or with another node by using the resource allocated by the primary node. For a communication domain, any two nodes in the communication domain may perform communication based on communication addresses.

In some specific implementation scenarios, the primary node may also be referred to as a G node, and the secondary node may also be referred to as a T node.

### 4. Topology structure of a communication domain

For a communication domain, a topology structure thereof may be a star single-hop topology structure, a tree-like three-layer multi-hop topology structure, a tree-like multi-hop topology structure, or the like.

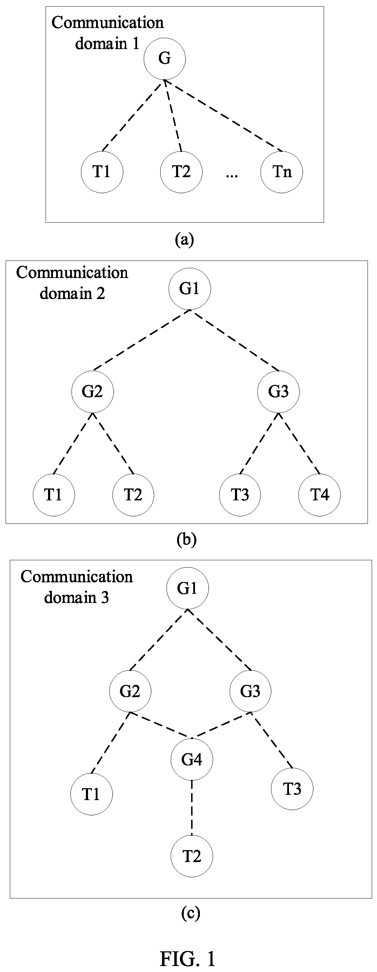

For example, refer to a star single-hop topology structure shown in (a) of FIG. 1. In (a) of FIG. 1, a communication domain 1 includes a G node and a plurality of T nodes (for example, a T1 node, a T2 node, ..., and a Tn node), and each T node is connected to the G node. Communication between the G node and the T node may be bidirectional unicast, or may be G->T broadcast communication.

Optionally, the structure shown in (a) of FIG. 1 may be applied to a vehicle-mounted communication scenario. For example, in the vehicle-mounted communication scenario, the G node may be a telematics box (Telematics BOX, T-BOX), the T node may be a user terminal in a vehicle, and the user terminal may be, for example, a mobile phone, a headset, a stereo, or a vehicle-mounted device. The T-BOX may also be referred to as a remote vehicle-mounted terminal or an internet of vehicles communication terminal. For example, the T-BOX may establish a communication connection to the mobile phone, to implement control such as opening a door, locking a door, controlling a vehicle window, and turning on/off an air conditioner.

For example, refer to a tree-like three-layer multi-hop topology structure shown in (b) of FIG. 1. In (b) of FIG. 1, a communication domain 2 includes a G1 node, a G2 node, a G3 node, a T1 node, a T2 node, a T3 node, and a T4 node, where the T1 node and the T2 node are connected to the G2 node, the T3 node and the T4 node are connected to the G3 node, and the G2 node and the G3 node are connected to the G1 node.

The G1 node may be used as a general management node, the G2 node and the G3 node may be G(T) nodes, the G2 node may be represented as G2(T), and the G3 node may be represented as G3(T). The G2 node is used as an example. For communication between the G2 node and the G1 node, the G2 node may be used as a T node, and the G1 node may be used as a G node. For communication between the G2 node and the T1 node, the G2 node may be used as a G node, and the T1 node may be used as a T node. For a tree-like three-layer multi-hop topology structure, communication between a G node and a T node may be bidirectional unicast (for example, bidirectional unicast between the G1 node and the T1 node may be represented as G1-G2(T)-T1), or may be broadcast (for example, G1->G2(T)->T).

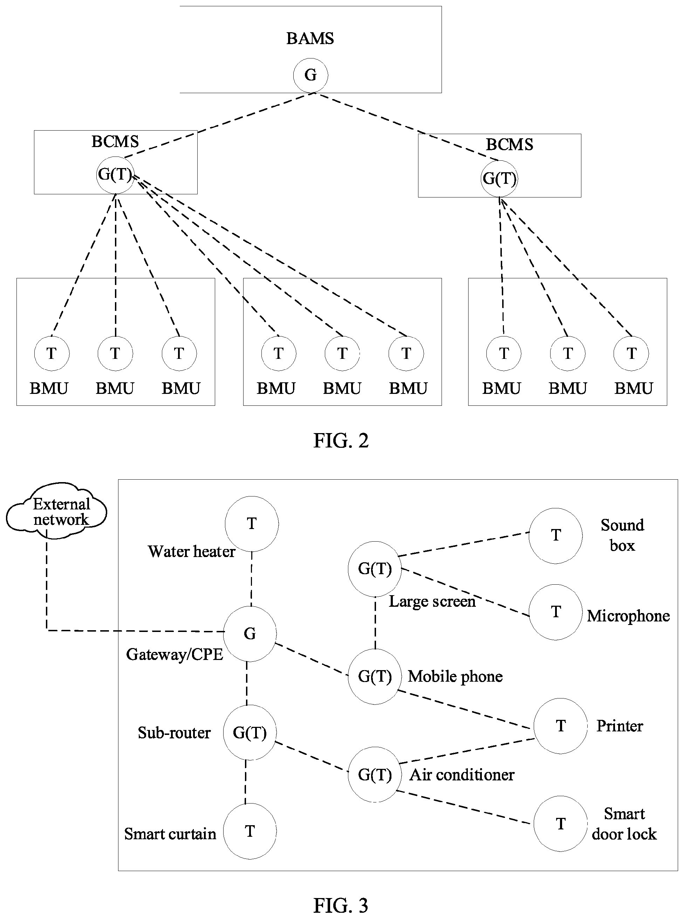

Optionally, the structure shown in (b) of FIG. 1 may be applied to a wireless BMS scenario. For the wireless BMS scenario, refer to FIG. 2. In FIG. 2, a battery array management system (BAMS) is used as a general management node, a battery cluster management system (BCMS) is a G(T) node, and a BMU is used as a T node. The structure shown in (b) of FIG. 1 may be further applied to a wireless tire pressure monitoring scenario and the like.

For example, refer to a tree-like multi-hop topology structure shown in (c) of FIG. 1. In (c) of FIG. 1, a communication domain 3 includes a G1 node, a G2 node, a G3 node, a G4 node, a T1 node, a T2 node, and a T3 node, where the T1 node is connected to the G2 node, the T2 node is connected to the G4 node, the G4 node may be connected to the G2 node and the G3 node, the G2 node is connected to the G1 node, and the G3 node is connected to the G1 node. The G1 node may be used as a general management node, and the G2 node, the G3 node, and the G4 node may be G(T) nodes.

Optionally, the structure shown in (c) of FIG. 1 may be applied to a smart home scenario. For the smart home scenario, refer to FIG. 3. In FIG. 3, a gateway/customer premises equipment (customer premises equipment, CPE) is used as a general management node, a sub-router, a large screen, a mobile phone, and an air conditioner are G(T) nodes, and a water heater, a smart curtain, a sound box, a microphone, a printer, and a smart door lock are T nodes. The structure shown in (c) of FIG. 1 may also be applied to a low-power large-scale sensor network. For example, in the low-power large-scale sensor network, a root (root) node may be used as a general management node, a backbone node may be used as G(T) node, and an end node may be used as a T node.

The following describes an application scenario and a system architecture of this application.

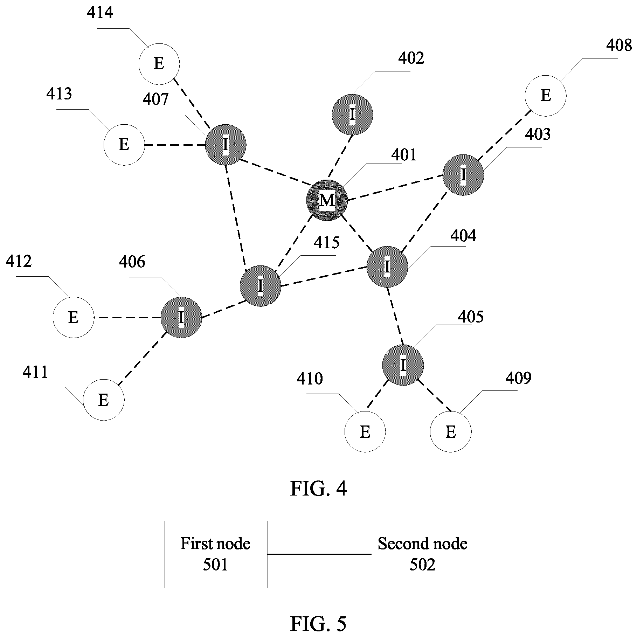

FIG. 4 is an example diagram of a structure of a network topology of a multi-hop network according to this application. The network topology in FIG. 4 includes an M node 401, an I node 402 to an I node 407, an I node 415, and an E node 408 to an E node 414. It should be noted that quantities of the nodes shown in FIG. 4 are merely used as an example, and do not constitute a limitation on this application.

The I node refers to an intermediate node or an intermediate routing node, and may be a packet sender or a packet receiver. The I node does not frequently move in the network, and has routing and forwarding capabilities. The I node may be, for example, a wireless intermediate system (wireless intermediate system, WIS) node.

The E node refers to an endpoint node or an end node, and may be a packet sender or a packet receiver. The E node may move in the network, for example, switch from a connection to one I node to a connection to another I node. The I node does not have the routing and forwarding capabilities. The E node may be, for example, a wireless end system (wireless end system, WES) node. The I node and the E node are physical nodes or physical units, and may be understood as nodes or units that actually exist. In terms of power storage, a power storage capability of the I node is higher than that of the E node. The E node may not have long-term power supply.

The M node 401 serves as a manager (manager), and may have capabilities such as a network topology configuration capability and a network path probe packet broadcast capability. In this embodiment of this application, during network initialization, the M node may obtain network topology configuration information or obtain a network topology construction rule. For obtaining the network topology configuration information by the M node, the M node may have the network topology configuration capability, and may configure and manage the network topology based on the network topology configuration information. For obtaining the network topology construction rule by the M node, the M node may broadcast a network path probe packet to an adjacent node (the I node or the E node) thereof, and the adjacent node of the M node may further broadcast the network probe packet, so that two adjacent nodes can establish an adjacency relationship based on a hop count in the network path probe packet, thereby forming a dynamic network topology.

Considering reliability of network management, one or more backup M nodes may further exist in the network. The M node is a function node, a function unit, a logical node, or a logical unit, and may be understood as a virtual node or unit. A function of the M node 401 may be implemented by using an I node, to be specific, the I node serves as a manager. The M node is essentially an I node. The M node may also be described as a manager node.

It may be understood that the network topology shown in FIG. 4 may be a communication domain, and the several topology structures shown in FIG. 1 may be a subset of the network topology shown in FIG. 4. For example, the G1 node, the G2 node, and the G3 node in (b) of FIG. 1 may be the I nodes in FIG. 4, the T1 node to the T4 node in (b) of FIG. 1 may be the E nodes in FIG. 4, and the G1 node may have the function of the M node. For another example, the gateway/CPE, the sub-router, the large screen, the mobile phone, and the air conditioner in FIG. 3 may be used as I nodes, the gateway/CPE may have the function of the M node, and the water heater, the smart curtain, and the smart door lock may be used as E nodes.

The network topology in embodiments of this application is a network topology of a multi-hop network, for example, (b) of FIG. 1 and (c) of FIG. 1. The multi-hop network may also be described as a mesh (mesh) network, a wireless multi-hop network, a wireless grid network, or the like.

Further, embodiments of this application may be applied to smart application scenarios such as a vehicle-mounted communication scenario, a wireless BMS scenario (as shown in FIG. 2), a battery pack/cell warehousing scenario, a smart home scenario (as shown in FIG. 3), and a smart cockpit, smart driving, smart manufacturing, and smart transportation.

For example, communication nodes include a first node and a second node. FIG. 5 is a diagram of a possible wireless communication system according to this application. The wireless communication system includes a first node 501 and a second node 502. In this embodiment of this application, an example in which a communication domain includes one M node and the first node 501 has a function of the M node is used. The second node 502 may be in any one of the following manners:
Manner 1: The second node 502 may be an adjacent node of the first node 501, and may be an I node or an E node. For example, based on FIG. 4, the second node 502 may be the I node 402, or may be an E node adjacent to the M node 401.
Manner 2: The second node 502 may be a node that communicates with the first node 501 by using an intermediate node. The second node 502 may be an I node or an E node. For example, based on FIG. 4, when the second node 502 is the E node 412, the second node 502 communicates with the M node 401 by using the I node 406 and the I node 415. For another example, based on FIG. 4, when the second node 502 is the I node 406, the second node 502 communicates with the M node 401 by using the I node 415.

It should be understood that the wireless communication system shown in FIG. 5 may further include more nodes. For ease of description, the first node and the second node are shown herein. For example, a third node may be further included.

The following describes a communication method provided in this application.

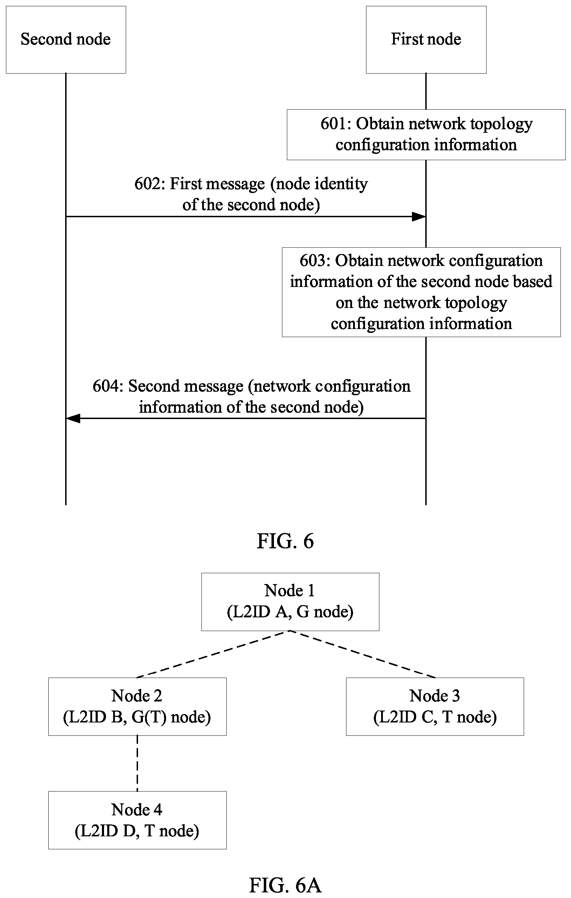

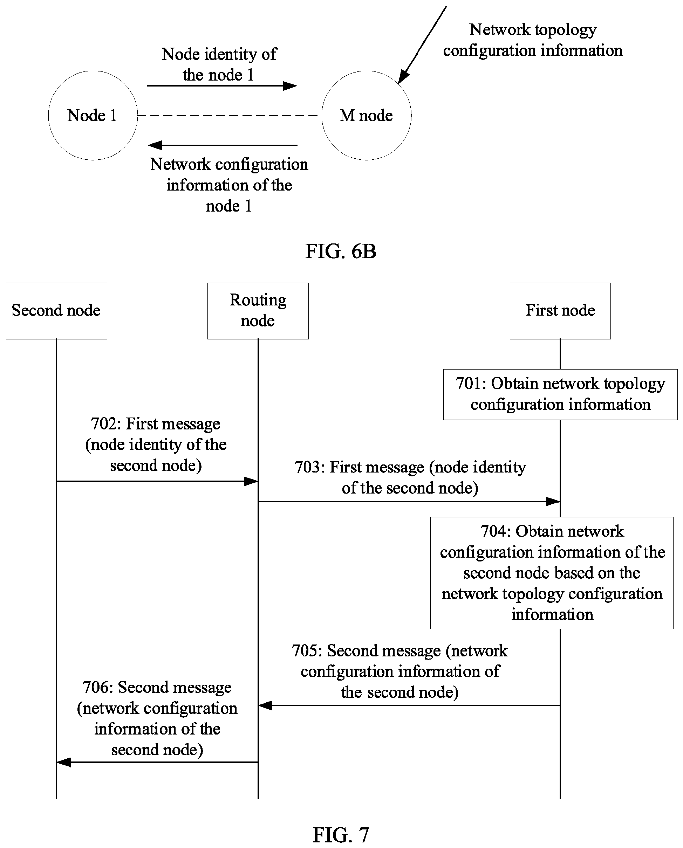

FIG. 6 is a schematic flowchart of a communication method according to this application. The method may include but is not limited to the following steps.

601: A first node obtains network topology configuration information.

The first node may be the M node 401 in FIG. 4. Optionally, for a multi-hop network, when the multi-hop network is initialized, a network administrator may select a node in a network topology of the multi-hop network as an M node, and set the node as an M node. For example, in the multi-hop network shown in FIG. 3, a network administrator may select the gateway/CPE as the M node. Optionally, the M node in the network topology may be set by default. For example, when a network topology of a wireless battery management system is set before delivery, a BAMS is set as an M node by default.

The network topology configuration information may include a node identity, a node type, and network topology information. The node identity identifies a node, for example, may be a layer 2 identity (layer 2 identity, L2ID), and a length of the L2ID may be 48 bits (bits). Node types may be classified into a first type, a second type, and a third type. If a node type of a node is the first type, it indicates that the node is a G node; if a node type of a node is the second type, it indicates that the node is a T node; and if a node type of a node is the third type, it indicates that the node is a G(T) node. The network topology information indicates a network topology structure, and the network topology structure may include an adjacency relationship between nodes, for example, a node 1 is adjacent to a node 2, and the node 2 is adjacent to a node 3. For network topology configuration information of a multi-hop network, the network topology configuration information may indicate a node identity of each node in the multi-hop network, a node type of each node, and an adjacency relationship between nodes in the multi-hop network. Optionally, the network topology configuration information may be presented in a form of a table, a tree diagram, or the like.

For example, the network topology configuration information is presented in a form of a table. Refer to Table 1.

**Table 1**

| | | Adjacent nodes | | | |
|---|---|---|---|---|---|
| Node 1 | | Node 2 | | Node 3 | |
| L2ID | Node type | L2ID | Node type | L2ID | Node type |
| A | First type | B | Third type | C | Second type |

| Node 2 | | Node 1 | | Node 4 | |
|---|---|---|---|---|---|
| L2ID | Node type | L2ID | Node type | L2ID | Node type |
| B | Third type | A | First type | D | Second type |

In Table 1, the node 1 is a node G, adjacent nodes of the node 1 include the node 2 and the node 3, the node 2 is a G(T) node, and the node 3 is a T node; and the node 2 is a G(T) node, adjacent nodes of the node 2 include the node 1 and the node 4, the node 1 is a G node, and the node 4 is a T node. When the length of the L2ID is 48 bits, in Table 1, A, B, C, and D may represent different values of the 48-bit L2ID.

For example, the network topology configuration information is presented in a form of a tree diagram. Refer to FIG. 6A. In FIG. 6A, the node 1 is a G node, and an L2ID is A; adjacent nodes of the node 1 include the node 2 and the node 3; the node 2 is a G(T) node, and an L2ID is B; the node 3 is a T node, and an L2ID is C; adjacent nodes of the node 2 include the node 1 and the node 4; and the node 4 is a T node, and an L2ID is D. When the length of the L2ID is 48 bits, A, B, C, and D may represent different values of the 48-bit L2ID.

The network topology configuration information includes a node identity, a node type, and network topology information. The network topology information is used to configure an adjacency relationship of each of a plurality of nodes. An adjacency relationship of a node may include a node identity of the node, a node type of the node, a node identity of an adjacent node of the node, and a node type of the adjacent node of the node. For example, the network configuration information includes an adjacency relationship of each node in the node 1 to the node 4, and the adjacent nodes of the node 1 include the node 2. In this case, the adjacency relationship of the node 1 includes the L2ID of the node 1, the node type of the node 1, the L2ID of the node 2, and the node type of the node 2. The node 1 may learn, by using the adjacency relationship, that the node 2 is an adjacent node thereof, and learn of the L2ID and the node type of the node 2. That is, a node may learn of, by using an adjacency relationship thereof, an adjacent node thereof, and a node identity and a node type of the adjacent node thereof.

The network topology configuration information may be static. To be specific, the node type, the node identity, and the network topology information are preconfigured in the network topology configuration information.

Optionally, the network topology configuration information may be preconfigured for the first node by the network administrator, so that the first node can obtain the network topology configuration information. For example, after selecting the M node, the network administrator inputs the network topology configuration information into the M node, so that the M node can obtain the network topology configuration information.

Optionally, the network topology configuration information may be set by default. For example, the network topology configuration information of the wireless battery management system is set in a BAMS during factory setting, so that the BAMS can obtain the network topology configuration information when being started.

Optionally, the network topology configuration information may be generated by the first node. For example, the first node generates the network topology information based on the node identity and the node type of each node in the multi-hop network, and further generates the network topology configuration information.

In the embodiment shown in FIG. 6, the first node has a network topology configuration capability. For a multi-hop network, the first node may provide, based on network topology configuration information of the multi-hop network, network configuration information for a node that requests to join the multi-hop network. A node that joins the multi-hop network may also be described as a node running in the multi-hop network. It should be noted that, after the first node is determined during initialization of a multi-hop network, nodes that have joined the multi-hop network temporarily include only the first node, which waits for another node in network topology configuration information of the multi-hop network to join the multi-hop network.

602: A second node sends a first message to the first node. Correspondingly, the first node receives the first message from the second node. The first message includes a node identity of the second node. The node identity of the second node may be, for example, an L2ID.

The second node may be understood as a node that requests to join the network. For example, the network topology configuration information is network topology configuration information of a multi-hop network 1, and the second node may be a node that requests to join the multi-hop network 1. That the first message includes the node identity of the second node may indicate that the second node requests to join the multi-hop network in which the first node is located. The node identity of the second node may be configured in the network topology configuration information, or may not be configured in the network topology configuration information. In the embodiment shown in FIG. 6, an example in which the node identity of the second node is configured in the network topology configuration information, and the second node is an adjacent node of the first node is used.

Before the second node sends the first message to the first node, the second node establishes a connection to the first node. That the second node establishes a connection to the first node may include: The second node discovers the first node, or the first node discovers the second node, so that the second node accesses a wireless network in which the first node is located; and a broadcast message received by the second node indicates that the first node has the network topology configuration capability, and the second node establishes a connection to the first node. If the broadcast message indicates that the first node does not have the network topology configuration capability, the second node does not establish a connection to the first node. Optionally, the broadcast message may include indication information, and the indication information indicates whether the first node has the network topology configuration capability. The indication information may be described as network configuration capability indication information, network configuration status indication information, or the like, and may be one bit or one field. A value of the bit or a value of the field indicates whether the first node has the network topology configuration capability. For example, if the value of the bit is 1, it indicates that the first node has the network topology configuration capability; or if the value of the bit is 0, it indicates that the first node does not have the network topology configuration capability.

That the second node discovers the first node may be that the first node, as a discovered party, sends a first system message or a first broadcast message in a broadcast manner, and the second node receives the first system message or the first broadcast message by scanning, so that the second node can determine that the first node is discovered. The first system message or the first broadcast message may carry device information of the first node, for example, carry a node identity of the first node. The first broadcast message and the broadcast message indicating whether the first node has the network topology configuration capability may be a same broadcast message, or may be different broadcast messages. For example, the first node first sends the first broadcast message in a broadcast manner, and when receiving the first broadcast message by scanning, the second node determines that the first node is discovered. Then, the first node broadcasts, in a broadcast manner, a broadcast message indicating whether the first node has the network topology configuration capability. Optionally, the second node executes a node discovery mechanism with a node type as the second type to discover the first node, that is, executes the node discovery mechanism as a T node. Alternatively, the second node may access, with a node type as the second type, a network in which the first node is located, that is, access the network as a T node. That is, the second node establishes a connection to the first node as a T node.

That the first node discovers the second node may be that the second node, as a discovered party, sends a second system message or a second broadcast message in a broadcast manner, and the first node receives the second system message or the second broadcast message by scanning, so that the first node can determine that the second node is discovered. The second system message or the second broadcast message carries device information of the second node, for example, the node identity of the second node.

It may be understood that the node discovery mechanism is mutual. A node (for example, the node 1), as a discovered party, sends a system message or a broadcast message in a broadcast manner, where the system message or the broadcast message carries the device information of the node 1. A node (for example, the node 2), as a discovery party, receives the system message or the broadcast message by scanning, to determine whether to establish a connection to the node 1.

603: The first node obtains network configuration information of the second node based on the network topology configuration information.

When receiving the node identity of the second node, the first node may search the network topology configuration information for whether the node identity of the second node is included. If the network topology configuration information includes the node identity of the second node, the first node obtains the network configuration information of the second node from the network topology configuration information based on the node identity of the second node. To be specific, the first node obtains the network configuration information of the second node based on the network topology configuration information.

The network configuration information of the second node indicates: a node type of the second node, an adjacent node of the second node, and a node type of the adjacent node of the second node. It may be understood that the network configuration information of the second node is used to configure an adjacency relationship of the second node, and the adjacency relationship may include the node identity of the second node, the node type of the second node, a node identity of the adjacent node of the second node, and the node type of the adjacent node of the second node. There may be one or more adjacent nodes of the second node, depending on the network topology information.

Generally, two directly connected nodes are of different node types. For example, based on Table 1, the node types of the node 1 and the node 2 are different, and the node types of the node 1 and the node 3 are different. That is, the node type of the second node is different from the node type of the adjacent node thereof. For example, the first node is an M node, that is, a G node, and the second node may be a T node or a G(T) node.

It may be understood that, for any node in the network topology configuration information, network configuration information of the node may include: a node type of the node being a G node, a node identity of the node, a node type of an adjacent node of the node being a T node, and a node identity of the T node as the adjacent node of the node; or a node type of the node being a T node, a node identity of the node, a node type of an adjacent node of the node being a G node, and a node identity of the G node as the adjacent node of the node; or a node type of the node being a G(T) node, a node identity of the node, a node type of an adjacent node of the node being a G node, a node type of an adjacent node of the node being a T node, a node identity of the G node as the adjacent node of the node, and a node identity of the T node as the adjacent node of the node. For example, based on Table 1, network configuration information of the node 2 may include: the node type of the node 2 being a G(T) node, the L2ID of the node 2, an adjacent node of the node 2 as a T node being the node 1 (a G node), the L2ID of the node 1, an adjacent node of the node 2 as a G node being the node 4 (a T node), and the L2ID of the node 4.

604: The first node sends a second message to the second node. Correspondingly, the second node receives the second message from the first node. The second message includes the network configuration information of the second node.

When receiving the network configuration information of the second node, the second node runs, by using the network configuration information, in the multi-hop network in which the first node is located. Running may be running a routing protocol after joining the network, so as to establish a unicast route between the first node and the second node. For example, if the network configuration information indicates that the second node is a T node, the second node runs the routing protocol as a T node. For another example, if the network configuration information indicates that the second node is a G(T) node, the second node runs the routing protocol as a G(T) node.

Optionally, when receiving the network configuration information of the second node, the second node may manage the adjacency relationship of the second node based on the network configuration information. Managing the adjacency relationship of the second node may include establishing a first adjacency relationship of the second node, and/or disconnecting a second adjacency relationship of the second node. The first adjacency relationship is an adjacency relationship indicated by the network configuration information of the second node. Before the second node obtains the network configuration information thereof, if the second node does not have any adjacency relationship of the second node, when obtaining the network configuration information thereof, the second node may establish the first adjacency relationship based on the network configuration information. The second adjacency relationship is an adjacency relationship not indicated by the network configuration information of the second node. Before the second node obtains the network configuration information thereof, if some adjacency relationships already exist on the second node, and these adjacency relationships are not indicated in the network configuration information of the second node, the second node disconnects these adjacency relationships based on the network configuration information thereof, and establishes the first adjacency relationship of the second node; or if some adjacency relationships already exist on the second node, and these adjacency relationships include the first adjacency relationship, the second node disconnects an adjacency relationship other than the first adjacency relationship in these adjacency relationships, that is, disconnects the second adjacency relationship.

Optionally, when receiving the network configuration information of the second node, the second node may update the node type of the second node based on the network configuration information. For example, if the second node accesses a network as a T node or the second node executes the node discovery mechanism as a T node, and the network configuration information of the second node indicates that the second node is a G node or a G(T) node, the second node may update the node type of the second node from a T node to a G node or a G(T) node. For another example, if the second node accesses a network as a T node or the second node executes the node discovery mechanism as a T node, and the network configuration information of the second node indicates that the second node is a T node, the second node may maintain the second node as a T node.

If the second node runs as a G node or a G(T) node and has established a unicast route with the first node, the second node can forward information. To be specific, the second node (a G node or a G(T) node) has a network topology configuration forwarding capability. The network topology configuration forwarding capability means that network configuration information fed back by the first node for another node can be forwarded to the another node, and a node identity of the another node can also be forwarded to the first node. In this embodiment of this application, a node having the network topology configuration forwarding capability may be referred to as a routing node, and the routing node may be described as a forwarding node, an intermediate routing node, or the like.

If the second node is a routing node and has established a unicast route with the first node, the second node may send a node identity of a third node to the first node when receiving a third message (including the node identity of the third node) from the third node. The third message may identify that the third node requests to join the multi-hop network in which the first node is located.

When receiving the node identity of the third node by using the second node, the first node may search the network topology configuration information for whether the node identity of the third node is included. If the network topology configuration information includes the node identity of the third node, the first node obtains network configuration information of the third node from the network topology configuration information based on the node identity of the third node, and sends a fourth message to the third node by using the second node, where the fourth message includes the network configuration information of the third node. The network configuration information of the third node is similar to the network configuration information of the second node. For details, refer to the specific description of the network configuration information of the second node in step 603. Details are not described herein again. If the network topology configuration information does not include the node identity of the third node, the first node may perform secure access authentication on the third node based on the node identity of the third node. When the secure access authentication succeeds on the third node, the first node configures the network configuration information for the third node based on the node identity of the third node and the network topology configuration information. For example, the first node considers the third node as an adjacent node of the second node, and a node type of the third node is a T node. Therefore, the network configuration information of the third node may include the node identity of the third node, the node type of the third node, a node identity of an adjacent node (that is, the second node) of the third node, and the node type of the second node. The first node sends the fourth message to the third node by using the second node, where the fourth message includes the network configuration information of the third node. In this way, even if a node that is not in a planned network topology can obtain network configuration information from the first node by using the routing node, so that the network topology can be expanded, and flexibility of the network topology can be improved. A manner of secure access authentication is not specifically limited in this application, provided that an identity of the third node can be confirmed.

That the first node sends the fourth message to the third node by using the second node may be: The first node sends the fourth message to the second node, where the fourth message includes the network configuration information of the third node; and the second node sends the fourth message to the third node, where the fourth message includes the network configuration information of the third node. Alternatively, the first node sends the network configuration information of the third node to the second node; and the second node sends the fourth message to the third node, where the fourth message includes the network configuration information of the third node.

If the second node runs as a T node and has established a unicast route with the first node, the second node cannot forward information. To be specific, the second node (a T node) does not have the network topology configuration forwarding capability. Further, when receiving the third message (including the node identity of the third node) from the third node, the second node may not send the node identity of the third node to the first node, but send the fourth message to the third node, where the fourth message indicates that the second node does not have the network topology configuration forwarding capability. The second node indicates that the second node does not have the network topology configuration forwarding capability, so as to reject the request of the third node. To be specific, an end node accesses a wireless network as a T node, and does not have the network topology configuration forwarding capability.

In the embodiment shown in FIG. 6, the first node is an M node, the second node is a planned adjacent node of the first node, and the adjacent node of the first node obtains network configuration information thereof from the first node, so as to obtain an adjacency relationship. This embodiment consumes less time, and helps improve communication efficiency.

For example, FIG. 6B is an example diagram of the embodiment shown in FIG. 6. In FIG. 6B, a network administrator inputs network topology configuration information into an M node. After discovering the M node, a node 1 receives a broadcast message from the M node, where the broadcast message indicates that the M node has a network topology configuration capability. The node 1 establishes a connection to the M node, so that the node 1 sends a node identity of the node 1 to the M node. When receiving the node identity of the node 1, the M node obtains network configuration information of the node 1 based on the network topology configuration information, and feeds back the network configuration information of the node 1 to the node 1.

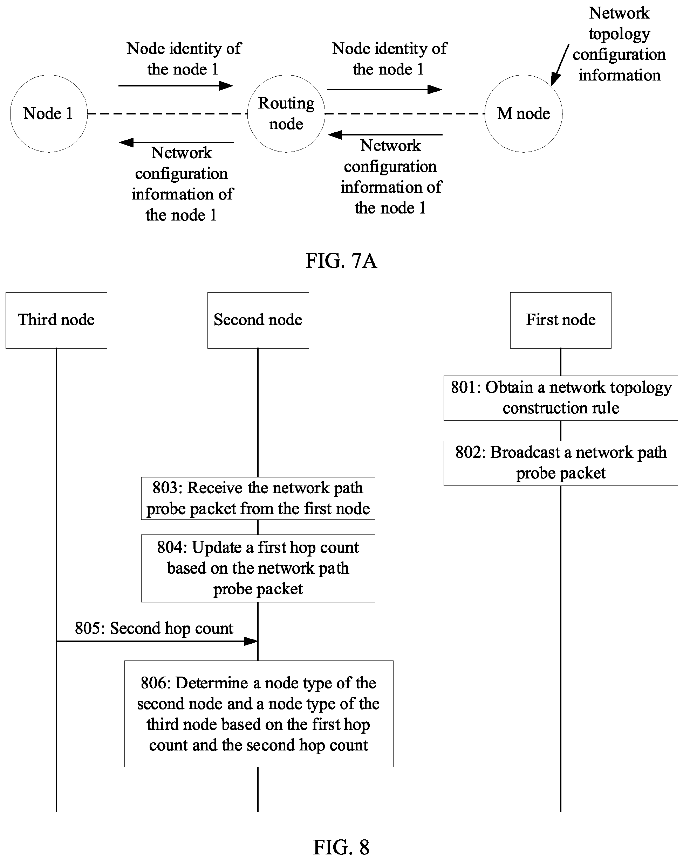

FIG. 7 is a schematic flowchart of another communication method according to this application. The method may include but is not limited to the following steps.

701: A first node obtains network topology configuration information. For step 701, refer to the specific description of step 601 in the embodiment shown in FIG. 6. Details are not described herein again.

702: A second node sends a first message to a routing node. Correspondingly, the routing node receives the first message from the second node. The first message includes a node identity of the second node.

The routing node has a network topology configuration forwarding capability. There may be one or more routing nodes. The routing node may obtain network configuration information thereof according to the method shown in FIG. 6. Further, the routing node may run, based on the network configuration information thereof, in a multi-hop network in which the first node is located, and establish a unicast route with the first node. A node running in a multi-hop network may be referred to as a joined node, and a unicast route may be established between multiple joined nodes, so that any two joined nodes can communicate with each other.

The second node may be understood as a node that requests to join the network. For example, the network topology configuration information is network topology configuration information of a multi-hop network 1, and the second node may be a node that requests to join the multi-hop network 1. That the first message includes the node identity of the second node may indicate that the second node requests to join the multi-hop network in which the first node is located. The node identity of the second node may be configured in the network topology configuration information, or may not be configured in the network topology configuration information. In the embodiment shown in FIG. 7, an example in which the node identity of the second node is configured in the network topology configuration information, the second node is an adj acent node of the routing node, and the routing node is an adjacent node of the first node is used.

Before the second node sends the first message to the routing node, the second node establishes a connection to the routing node. Establishing a connection to the routing node by the second node is similar to establishing a connection to the first node by the second node in FIG. 6. For details, refer to the specific description of establishing a connection to the first node by the second node in FIG. 6. Details are not described herein again. A difference lies in that the broadcast message of the first node in FIG. 6 indicates that the first node has the network topology configuration capability, and a broadcast message of the routing node in FIG. 7 indicates that the routing node has the network topology configuration forwarding capability. If the routing node does not have the network topology configuration forwarding capability, the second node does not establish a connection to the routing node.

Optionally, the broadcast message of the routing node may include indication information, where the indication information indicates whether the routing node has the network topology configuration forwarding capability. The indication information may be described as network configuration forwarding capability indication information, network configuration status indication information, or the like, and may be one bit or one field. A value of the bit or a value of the field indicates whether the routing node has the network topology configuration forwarding capability. For example, if the value of the bit is 1, it indicates that the routing node has the network topology configuration forwarding capability; or if the value of the bit is 0, it indicates that the routing node does not have the network topology configuration forwarding capability.

Optionally, the second node may access a network with a node type as a second type, that is, access the network as a T node. Alternatively, the second node executes a node discovery mechanism with the node type as the second type, that is, executes the node discovery mechanism as a T node, to discover the routing node.

703: The routing node sends the first message to the first node. Correspondingly, the first node receives the first message from the routing node.

With reference to step 702 and step 703, it may be understood that the second node sends the first message to the first node by using the routing node. Correspondingly, the first node receives the first message from the second node by using the routing node. That is, the second node sends the node identity of the second node to the first node by using the routing node.

704: The first node obtains network configuration information of the second node based on the network topology configuration information. For step 704, refer to the specific description of step 603 in the embodiment shown in FIG. 6. Details are not described herein again.

705: The first node sends a second message to the routing node. Correspondingly, the routing node receives the second message from the first node. The second message includes the network configuration information of the second node.

706: The routing node sends the second message to the second node. Correspondingly, the second node receives the second message from the routing node. The second message includes the network configuration information of the second node.

With reference to step 705 and step 706, it may be understood that the first node sends the second message to the second node by using the routing node. Correspondingly, the second node receives the second message from the first node by using the routing node. That is, the first node sends the network configuration information of the second node to the second node by using the routing node.

When receiving the network configuration information of the second node, the second node may run, by using the network configuration information, in the multi-hop network in which the first node is located.

In the embodiment shown in FIG. 7, the first node is an M node, the second node is an adjacent node of the routing node, and the second node obtains the network configuration information from the first node by using the routing node, so as to obtain an adjacency relationship. This embodiment consumes less time, and helps improve communication efficiency.

For example, FIG. 7A is an example diagram of the embodiment shown in FIG. 7. In FIG. 7A, a network administrator inputs network topology configuration information into an M node. After discovering a routing node, a node 1 receives a broadcast message from the routing node, where the broadcast message indicates that the routing node has a network topology configuration forwarding capability. The node 1 establishes a connection to the routing node, and the routing node is a joined node. In this way, the node 1 sends a node identity of the node 1 to the M node by using the routing node. When receiving the node identity of the node 1, the M node obtains network configuration information of the node 1 based on the network topology configuration information, and feeds back the network configuration information of the node 1 to the node 1 by using the routing node.

It may be understood that, in the embodiments shown in FIG. 6 and FIG. 7, the network topology configuration information is static, so that the M node can provide network configuration information for a node that requests to join the network, to quickly join the network, thereby helping improve communication efficiency. Optionally, when the M node detects that a joined node leaves a network topology, the M node may update the network topology configuration information, and send updated network configuration information to an adjacent node of the node, to implement real-time update.

FIG. 8 is a schematic flowchart of still another communication method according to this application. The method may include but is not limited to the following steps.

801: A first node obtains a network topology construction rule.

The first node may be the M node 401 in FIG. 4. Optionally, for a multi-hop network, when the multi-hop network is initialized, a network administrator may select a node in a network topology of the multi-hop network as an M node, and set the node as an M node. For example, in the multi-hop network shown in FIG. 3, a network administrator may select the gateway/CPE as the M node. Optionally, the M node in the network topology may be set by default. For example, when a network topology of a wireless battery management system is set before delivery, a BAMS is set as an M node by default.

The network topology construction rule indicates how to construct a network topology, for example, how to establish an adjacency relationship between nodes. The network topology construction rule may include one or more rules, and the one or more rules are used to dynamically construct a network topology. Optionally, the network topology construction rule may include an initial network topology construction rule and a secondary network topology construction rule, where the initial network topology construction rule is used to construct an initial network topology, and the secondary network topology construction rule is used to construct a network topology in a next time period. Optionally, the network topology construction rule may include a rule for establishing an adjacency relationship between any two adjacent nodes, so as to construct a network topology.

In an implementation, the network topology construction rule may be used to indicate a rule that a first hop count and a second hop count need to meet, the first hop count is a minimum hop count from the first node to a second node in a network topology, and the second hop count is a minimum hop count from the first node to a third node in the network topology. The second node and the third node may be any two adjacent nodes configured to construct a network topology. A hop count in a network path probe packet received by a node indicates a hop count from the first node to the node. The node may receive a plurality of network path probe packets in a time period, and hop counts in different path probe packets may be different. The node compares the hop counts in the plurality of network path probe packets received within the time period, to determine a minimum hop count.

Optionally, the rule that the first hop count and the second hop count need to meet may include: If the first hop count is less than the second hop count, a node type of the second node is a first type (that is, the second node is a G node), and a node type of the third node is a second type (that is, the third node is a T node); or if the first hop count is greater than the second hop count, a node type of the second node is a second type (that is, the second node is a T node), and a node type of the third node is a first type (that is, the third node is a G node). If the first hop count is the same as the second hop count, the node types of the second node and the third node may be determined by using another rule. The rule that the first hop count and the second hop count need to meet may alternatively be described as a rule of comparing the first hop count with the second hop count to determine the node types, a rule of establishing an adjacency relationship between adjacent nodes, a secondary network topology construction rule, or the like.

Further, the network topology construction rule may be further used to indicate a rule that a node identity of the second node and a node identity of the third node need to meet.

Optionally, the rule that the node identity of the second node and the node identity of the third node need to meet may include: If the node identity of the second node is less than the node identity of the third node, the node type of the second node is the first type (that is, the second node is a G node), and the node type of the third node is the second type (that is, the third node is a T node); or if the node identity of the second node is greater than the node identity of the third node, the node type of the second node is the second type (that is, the second node is a T node), and the node type of the third node is the first type (that is, the third node is a G node). The rule that the node identity of the second node and the node identity of the third node need to meet may alternatively be described as a rule of comparing node identities to determine node types, a rule of establishing an initial adjacency relationship between adjacent nodes, an initial network topology construction rule, or the like.

When the first hop count is the same as the second hop count, the node types of the second node and the third node may be determined by using the rule that the node identity of the second node and the node identity of the third node need to meet, or the node types of the second node and the third node are determined in another manner.

Optionally, the network topology construction rule may be preconfigured for the first node by the network administrator, so that the first node can obtain the network topology construction rule. For example, after selecting an M node, the network administrator inputs the network topology construction rule into the M node, so that the M node can obtain the network topology construction rule. Optionally, the network topology construction rule may be preset, so that the first node can obtain the network topology construction rule. Optionally, the network topology construction rule may be generated by the first node.

In an optional implementation, the first node may broadcast the network topology construction rule, so that a node that receives the rule can establish an adjacency relationship with an adjacent node thereof according to the rule, thereby constructing a network topology. In another optional implementation, the network topology construction rule is preconfigured for a node that constructs a network topology, so that the node can establish an adjacency relationship with an adjacent node thereof according to the rule.

802: The first node broadcasts a network path probe packet.

The network path probe packet may be used to detect and carry a hop count between nodes. The network path probe packet is used to detect a hop count between nodes. That is, after receiving a network path probe packet (for example, a network path probe packet 1), a node obtains a hop count carried in the network path probe packet 1, to determine a hop count from the first node to the node. The node broadcasts a network path probe packet (for example, a network path probe packet 2) to an adjacent node thereof. A hop count carried in the network path probe packet 2 may be the hop count carried in the network path probe packet 1 plus 1. "Used to probe a hop count between nodes" may be understood as determining, based on a hop count carried in a received network path probe packet, a hop count carried in a sent network path probe packet. The hop count between nodes carried in the network path probe packet refers to a hop count from the first node to a node that receives the network path probe packet. That the network path probe packet may be used to detect and carry a hop count between nodes may be described as that the network path probe packet may be used to indicate a hop count between nodes. An initial hop count between nodes is 1. For example, an adjacent node (for example, a node 1) of the first node receives the network path probe packet from the first node, and the hop count in the network path probe packet is 1. If the node 1 sends a network path probe packet to an adjacent node thereof, a hop count in the network path probe packet is 2, and so on.

Optionally, the first node broadcasts the network path probe packet to the adjacent node thereof. In this way, the hop count in the network path probe packet received by the adjacent node of the first node is 1. That is, the network path probe packet broadcast by the first node may be received by the adjacent node thereof. Further, a network path probe packet broadcast by a node may be received by an adjacent node of the node.

Optionally, the first node periodically broadcasts the network path probe packet, so as to periodically adjust the network topology. For example, the first node broadcasts the network path probe packet every 10 minutes. A specific period may be configured by the first node, or may be configured in the first node by the network administrator, or the like.

It should be noted that a broadcast message sent by a node may be discarded. Therefore, after sending a network path probe packet, the node needs to receive an acknowledgment (acknowledgment, ACK) message fed back by an adjacent node thereof; otherwise, retransmission is required. A maximum quantity of retransmission times may be 3.

803: A second node receives the network path probe packet from the first node.

That the second node receives the network path probe packet from the first node may be that the second node directly receives the network path probe packet from the first node, or may be that the second node indirectly receives the network path probe packet from the first node. If the second node directly receives the network path probe packet from the first node, it indicates that the second node is an adjacent node of the first node. If the second node indirectly receives the network path probe packet from the first node, it indicates that the second node receives the network path probe packet from the first node by using another node.

For example, based on FIG. 4, the I node 407 may directly receive a network path probe packet from the M node 401, and a hop count in the network path probe packet is 1; and the E node 410 may receive a network path probe packet from the M node 401 by using the I node 404 and the I node 405, and a hop count in the network path probe packet is 3.

A quantity of network path probe packets received by the second node may be one or more, which depends on a constructed network topology. For example, based on FIG. 4, the E node 410 may receive a network path probe packet from the M node 401 by using the I node 404 and the I node 405, and a hop count in the network path probe packet is 3. The E node 410 may alternatively receive a network path probe packet from the M node 401 by using the I node 415, the I node 404, and the I node 405, and a hop count in the network path probe packet is 4.

804: The second node updates a first hop count based on the network path probe packet. The first hop count is a minimum hop count from the first node to the second node.

Before updating the first hop count based on the network path probe packet, the second node sends a first broadcast message, where the first broadcast message includes the node identity of the second node, so that another node discovers the second node. The second node receives a second broadcast message from the third node, where the second broadcast message includes the node identity of the third node.

Optionally, the second node may send the first broadcast message with the node type as the first type, that is, the second node sends the first broadcast message as a node G, and expects to be discovered by another node. If the another node receives the first broadcast message by scanning, the another node discovers the second node. In addition, with the node type as the second type, the second node may receive a broadcast message of another node by scanning, that is, receive the broadcast message of the another node as a T node by scanning, so as to discover the another node. Therefore, an adjacent node of the second node is determined.

The second node may obtain the node identity of the third node by receiving the second broadcast message, and determine an initial node identity of the second node and an initial node identity of the third node by comparing the node identity of the second node with the node identity of the third node. For example, if the node identity of the second node is less than the node identity of the third node, it is determined that the initial node type of the second node is the first type (that is, the second node is a G node), and the initial node type of the third node is the second type (that is, the third node is a T node); or if the node identity of the second node is greater than the node identity of the third node, the initial node type of the second node is the second type (that is, the second node is a T node), and the initial node type of the third node is the first type (that is, the third node is a G node). It can be learned that an adjacency relationship may be established and node types may be determined by comparing node identities of adjacent nodes.

Optionally, a process in which the second node sends the first broadcast message as a G node, and receives a broadcast message of another node as a T node by scanning may alternatively be performed before step 802.

The first hop count is locally maintained by the second node. That is, the first hop count is a minimum hop count locally recorded by the second node. As time goes on and a node joins or leaves the network, or the like, hop counts in network path probe packets received by a node in different time periods may change, and consequently, a minimum hop count changes. For example, the first hop count is 3 in a first time period, and if a network path probe packet with a hop count of 2 is received in a second time period, the first hop count is 2.

Optionally, the first hop count may be a minimum hop count in a network path probe packet received within a period of time, and the hop count in the network path probe packet indicates a hop count from the first node to the second node. For example, the second node receives three network path probe packets from 10:00 am to 11:00 am, and hop counts in the three network path probe packets are 3, 4, and 2 respectively. In this case, the first hop count is 2. That is, for any node, when receiving the 1^{st} network path probe packet, the node does not immediately update a locally recorded hop count.

Optionally, the second node may access a wireless network between two network path probe packet sending periods, and update the first hop count.

Further, if an updated first hop count is less than the first hop count before the update, when the second node broadcasts a network path probe packet to another node, a hop count in the network path probe packet is a third hop count, a difference between the third hop count and the updated first hop count is a preset value, and the preset value is 1. That is, the second node sends a first network path probe packet to a fourth node, where a hop count in the first network path probe packet is the third hop count, and the third hop count is equal to the updated first hop count plus 1.

805: The second node obtains a second hop count from a third node. The second hop count is a minimum hop count from the first node to the third node.

Optionally, the second node may obtain the second hop count from the third node after updating the first hop count and before a network path probe packet sending period. Alternatively, the second node may obtain the second hop count from the third node between two network path probe packet sending periods. The second hop count is similar to the first hop count. For details, refer to the specific description of the first hop count. Details are not described herein again.

806: The second node determines a node type of the second node and a node type of the third node based on the first hop count and the second hop count.

Optionally, that the second node determines a node type of the second node and a node type of the third node based on the first hop count and the second hop count may include: If the first hop count is less than the second hop count, determining that the node type of the second node is the first type (that is, the second node is a G node), and the node type of the third node is the second type (that is, the third node is a T node); or if the first hop count is greater than the second hop count, determining that the node type of the second node is the second type (that is, the second node is a T node), and the node type of the third node is the first type (that is, the third node is a G node).

If the first hop count is the same as the second hop count, the second node determines the node types of the second node and the third node according to a preset rule. The preset rule is related to a size of a node identity. For example, if an L2ID of the second node is less than an L2ID of the third node, it is determined that the node type of the second node is the first type (that is, the second node is a G node), and the node type of the third node is the second type (that is, the third node is a T node); or if an L2ID of the second node is greater than an L2ID of the third node, it is determined that the node type of the second node is the second type (that is, the second node is a T node), and the node type of the third node is the first type (that is, the third node is a G node).

The node type determined in step 806 may be a node type in a time period. As the node joins or leaves the network, a hop count in a network path probe packet received by the second node in a next time period may change. Consequently, the first hop count may change, and the node type may change.

Optionally, the second node obtains duration in which the node type thereof is the first type. If the duration is greater than preset duration, the second node maintains the node type as the first type. To be specific, the second node obtains duration in which the second node is a G node. If the duration is greater than the preset duration, the second node maintains as a G node, and is not changed to a T node. When determining that the second node is a G node, the second node may start a timer. When time of the timer is greater than the preset duration, the second node maintains as a G node. The preset duration may be preset, default, or included in the network topology construction rule.

Optionally, the network topology construction rule may be further used to indicate an end node to access a wireless network as a T node, and after receiving a network probe packet, the end node does not broadcast the network probe packet to an adjacent node thereof. Alternatively, after receiving a network probe packet, the end node does not broadcast the network probe packet to an adjacent node thereof by default.

In the embodiment shown in FIG. 8, the second node determines the node type of the second node and the node type of the third node based on the first hop count and the second hop count, so as to establish an adj acency relationship between the second node and the third node, thereby helping improve communication efficiency.

The foregoing describes in detail the methods provided in embodiments of this application. The following provides apparatuses for implementing any method in embodiments of this application. For example, an apparatus is provided, and includes units (or means) configured to implement steps performed by a node in any one of the foregoing methods.

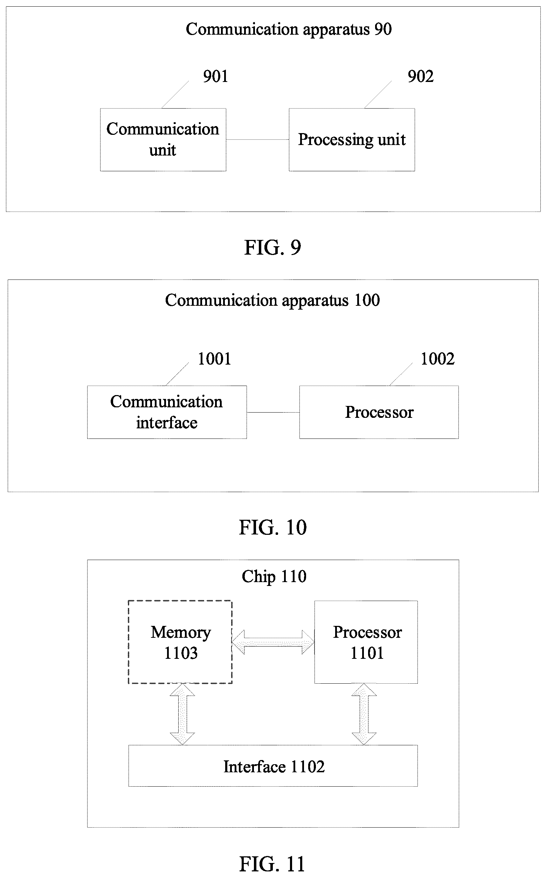

FIG. 9 is a diagram of a structure of a communication apparatus according to an embodiment of this application.

As shown in FIG. 9, the communication apparatus 90 may include a communication unit 901 and a processing unit 902. The communication unit 901 and the processing unit 902 may be software, hardware, or a combination of software and hardware.

The communication unit 901 may implement a sending function and/or a receiving function, and the communication unit 901 may also be described as a transceiver unit, an obtaining unit, or a sending unit. Alternatively, the communication unit 901 may be a unit integrating an obtaining unit and a sending unit. The obtaining unit is configured to implement a receiving function, and the sending unit is configured to implement a sending function. Optionally, the communication unit 901 may be configured to receive information sent by another apparatus, and may be further configured to send information to the another apparatus.

In a possible design, the communication apparatus 90 may be corresponding to the first node in the foregoing method embodiment. For example, the communication apparatus 90 may be the first node, or may be a chip in the first node. The communication apparatus 90 may include units configured to perform the operations performed by the first node in the foregoing method embodiment, and the units in the communication apparatus 90 are separately configured to implement the operations performed by the first node in the foregoing method embodiment.

In another possible design, the communication apparatus 90 may be corresponding to the second node in the foregoing method embodiment. For example, the communication apparatus 90 may be the second node, or may be a chip in the second node. The communication apparatus 90 may include units configured to perform the operations performed by the second node in the foregoing method embodiment, and the units in the communication apparatus 90 are separately configured to implement the operations performed by the second node in the foregoing method embodiment.

According to this embodiment of this application, the units in the apparatus shown in FIG. 9 may be separately or all combined into one or more other units, or one or more units in the apparatus may be further split into a plurality of units with more detailed functions. This can implement a same operation without affecting implementation of technical effects of this embodiment of this application. The foregoing units are obtained through division based on logical functions. In actual application, a function of one unit may be implemented by a plurality of units, or functions of a plurality of units are implemented by one unit. In another embodiment of this application, a node may alternatively include another unit. In actual application, the functions may be implemented with assistance of the another unit, and may be implemented by a plurality of units in collaboration.

It should be noted that, for implementation of each unit, refer to the corresponding descriptions in the method embodiments shown in FIG. 6, FIG. 7, and FIG. 8.

In the communication apparatus 90 described in FIG. 9, the second node may obtain an adjacency relationship thereof, thereby helping improve communication efficiency.

FIG. 10 is a diagram of a structure of a communication apparatus according to an embodiment of this application.

It should be understood that the communication apparatus 100 shown in FIG. 10 is merely an example. The communication apparatus in this embodiment of this application may further include another component, or includes components whose functions are similar to those of components in FIG. 10, or does not need to include all components in FIG. 10.

The communication apparatus 100 includes a communication interface 1001 and at least one processor 1002.

The communication apparatus 100 may correspond to the first node or the second node. The communication interface 1001 is configured to receive and send a message, information, or a packet, and the at least one processor 1002 executes program instructions, so that the communication apparatus 100 implements a corresponding procedure of the method performed by a corresponding node in the foregoing method embodiment.

In a possible design, the communication apparatus 100 may be corresponding to the first node in the foregoing method embodiment. For example, the communication apparatus 100 may be the first node, or may be a chip in the first node. The communication apparatus 100 may include components configured to perform the operations performed by the first node in the foregoing method embodiment, and the components in the communication apparatus 100 are separately configured to implement the operations performed by the first node in the foregoing method embodiment. For details, refer to the corresponding description of the first node in the foregoing method embodiment.

In another possible design, the communication apparatus 100 may be corresponding to the second node in the foregoing method embodiment. For example, the communication apparatus 100 may be the second node, or may be a chip in the second node. The communication apparatus 100 may include components configured to perform the operations performed by the second node in the foregoing method embodiment, and the components in the communication apparatus 100 are separately configured to implement the operations performed by the second node in the foregoing method embodiment. For details, refer to the corresponding description of the second node in the foregoing method embodiment.

For a case in which the communication apparatus may be a chip or a chip system, refer to a diagram of a structure of a chip shown in FIG. 11.

As shown in FIG. 11, a chip 110 includes a processor 1101 and an interface 1102. There may be one or more processors 1101, and there may be a plurality of interfaces 1102. It should be noted that a function corresponding to each of the processor 1101 and the interface 1102 may be implemented by using a hardware design, or may be implemented by using a software design, or may be implemented by using a combination of software and hardware. This is not limited herein.

Optionally, the chip 110 may further include a memory 1103, and the memory 1103 is configured to store necessary program instructions and data.

In this application, the processor 1101 may be configured to invoke, from the memory 1103, a program for implementing the communication method on the first node or the second node provided in one or more embodiments of this application, and execute instructions included in the program. The interface 1102 may be configured to output an execution result of the processor 1101. In this application, the interface 1102 may be specifically configured to output each message, piece of information, or packet of the processor 1101.

For the communication method provided in one or more embodiments of this application, refer to the embodiments shown in FIG. 6, FIG. 7, and FIG. 8. Details are not described herein again.

The processor in this embodiment of this application may be a central processing unit (Central Processing Unit, CPU), or the processor may be another general-purpose processor, a digital signal processor (digital signal processor, DSP), an application specific-integrated circuit (application-specific integrated circuit, ASIC), a field programmable gate array (field programmable gate array, FPGA), another programmable logic device, a discrete gate or a transistor logic device, a discrete hardware component, or the like. The general-purpose processor may be a microprocessor, or the processor may be any conventional processor or the like.

The memory in embodiments of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

According to the methods provided in embodiments of this application, an embodiment of this application further provides a computer-readable storage medium. The computer-readable storage medium stores a computer program. When the computer program is run on one or more processors, the methods shown in FIG. 6, FIG. 7, and FIG. 8 may be implemented.

According to the methods provided in embodiments of this application, an embodiment of this application further provides a computer program product. The computer program product includes a computer program. When the computer program is run on a processor, the methods shown in FIG. 6, FIG. 7, and FIG. 8 may be implemented.

An embodiment of this application provides a terminal device. The terminal device includes at least one of the communication apparatus 90, the communication apparatus 100, or the chip 110. The terminal device may be a transportation device, a home device, a wearable device, a battery management system, or the like.

An embodiment of this application further provides a system. The system includes at least one terminal device, and/or at least one of the communication apparatus 90, the communication apparatus 100, or the chip 110.

An embodiment of this application further provides a processing apparatus, including a processor and an interface. The processor is configured to perform the method in any one of the foregoing method embodiments.

It should be understood that the processing apparatus may be a chip. For example, the processing apparatus may be a field programmable gate array (field programmable gate array, FPGA), or may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, may be a system on chip (system on chip, SoC), may be a central processor unit (central processor unit, CPU), may be a network processor (network processor, NP), may be a digital signal processor (digital signal processor, DSP), may be a micro controller unit (micro controller unit, MCU), and may be a programmable logic device (programmable logic device, PLD) or another integrated chip. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium, or may be transmitted from one computer-readable storage medium to another computer-readable storage medium. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc), or a semiconductor medium (for example, a solid state disk).

The units in the foregoing apparatus embodiments totally correspond to the electronic devices in the method embodiments, and corresponding modules or units perform corresponding steps. For example, the communication unit (transceiver) performs receiving or sending steps in the method embodiments, and other steps except sending and receiving may be performed by the processing unit (processor). For a function of a specific unit, refer to a corresponding method embodiment. There may be one or more processors.

It may be understood that in embodiments of this application, the electronic device may perform some or all steps in embodiments of this application. These steps or operations are merely examples. In embodiments of this application, other operations or variations of various operations may be performed. In addition, the steps may be performed in a sequence different from a sequence presented in embodiments of this application, and not all the operations in embodiments of this application may be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief de scription, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, wherein the method comprises:
obtaining, by a first node, network topology configuration information, wherein the network topology configuration information comprises a node identity, a node type, and network topology information;
receiving, by the first node, a first message, wherein the first message comprises a node identity of a second node;
obtaining, by the first node, network configuration information of the second node based on the network topology configuration information; and
sending, by the first node, a second message, wherein the second message comprises the network configuration information of the second node, wherein
the network configuration information of the second node indicates:
a node type of the second node;
an adjacent node of the second node; and
a node type of the adjacent node of the second node.

2. The method according to claim 1, wherein the second node and the adjacent node of the second node are of different node types.

3. The method according to claim 1 or 2, wherein
the receiving, by the first node, a first message comprises:
receiving, by the first node, the first message from the second node; and
the sending, by the first node, a second message comprises:
sending, by the first node, the second message to the second node.

4. The method according to any one of claims 1 to 3, wherein before the receiving, by the first node, a first message, the method further comprises:
sending, by the first node, a broadcast message, wherein the broadcast message indicates that the first node has a network topology configuration capability.

5. The method according to claim 1 or 2, wherein
the receiving, by the first node, a first message comprises:
receiving, by the first node, the first message from the second node by using a routing node; and
the sending, by the first node, a second message comprises:
sending, by the first node, the second message to the second node by using the routing node.

6. The method according to any one of claims 1 to 5, wherein the method further comprises:
receiving, by the first node, a third message from a third node by using the second node, wherein the third message comprises a node identity of the third node;
performing, by the first node, secure access authentication on the third node, wherein the node identity of the third node is not comprised in the network topology configuration information; and
when the secure access authentication succeeds on the third node, sending, by the first node, a fourth message to the third node by using the second node, wherein the fourth message comprises network configuration information of the third node.

7. A communication method, wherein the method comprises:
sending, by a second node, a first message, wherein the first message comprises a node identity of the second node; and
receiving, by the second node, a second message, wherein the second message comprises network configuration information of the second node, wherein
the network configuration information of the second node indicates:
a node type of the second node;
an adjacent node of the second node; and
a node type of the adjacent node of the second node.

8. The method according to claim 7, wherein the second node and the adjacent node of the second node are of different node types.

9. The method according to claim 7 or 8, wherein
the sending, by a second node, a first message comprises:
sending, by the second node, the first message to a first node; and
the receiving, by the second node, a second message comprises:
receiving, by the second node, the second message from the first node.

10. The method according to any one of claims 7 to 9, wherein before the sending, by a second node, a first message, the method further comprises:
receiving, by the second node, a broadcast message from the first node, wherein the broadcast message indicates that the first node has a network topology configuration capability.

11. The method according to claim 7 or 8, wherein
the sending, by a second node, a first message comprises:
sending, by the second node, the first message to a first node by using a routing node; and
the receiving, by the second node, a second message comprises:
receiving, by the second node, the second message from the first node by using the routing node.

12. The method according to any one of claims 7 to 9, wherein before the sending, by a second node, a first message, the method comprises:
receiving, by the second node, a broadcast message from a routing node, wherein the broadcast message indicates that the routing node has a network topology configuration forwarding capability.

13. The method according to any one of claims 7 to 12, wherein the method further comprises:
managing, by the second node, an adjacency relationship of the second node based on the network configuration information of the second node.

14. The method according to any one of claims 7 to 13, wherein the method further comprises:
updating, by the second node, the node type of the second node based on the network configuration information of the second node.

15. The method according to claim 14, wherein the method further comprises:
receiving, by the second node, a third message from a third node, wherein the third message comprises a node identity of the third node;
sending, by the second node, the node identity of the third node to the first node;
receiving, by the second node, a fourth message from the first node, wherein the fourth message comprises network configuration information of the third node; and
sending, by the second node, the network configuration information of the third node to the third node.

16. The method according to any one of claims 7 to 13, wherein the method further comprises:
receiving, by the second node, a third message from the third node, wherein the third message comprises a node identity of the third node; and
sending, by the second node, a fourth message to the third node, wherein the fourth message indicates that the second node does not have a network topology configuration forwarding capability.

17. A communication method, wherein the method comprises:
obtaining, by a first node, a network topology construction rule, wherein the network topology construction rule indicates a rule that a first hop count and a second hop count need to meet, the first hop count is a minimum hop count from the first node to a second node in the network topology, and the second hop count is a minimum hop count from the first node to a third node in the network topology; and
broadcasting, by the first node, a network path probe packet, wherein the network path probe packet is used to probe and carry a hop count between nodes.

18. The method according to claim 17, wherein the network topology construction rule is further used to indicate a rule that a node identity of the second node and a node identity of the third node need to meet.

19. The method according to claim 17 or 18, wherein the method further comprises:
broadcasting, by the first node, the network topology construction rule.

20. A communication method, wherein the method comprises:
receiving, by a second node, a network path probe packet from a first node;
updating, by the second node, a first hop count based on the network path probe packet, wherein the first hop count is a minimum hop count from the first node to the second node;
obtaining, by the second node, a second hop count from a third node, wherein the second hop count is a minimum hop count from the first node to the third node; and
determining, by the second node, a node type of the second node and a node type of the third node based on the first hop count and the second hop count.

21. The method according to claim 20, wherein the determining, by the second node, a node type of the second node and a node type of the third node based on the first hop count and the second hop count comprises:
if the first hop count is less than the second hop count, determining, by the second node, that the node type of the second node is a first type and the node type of the third node is a second type; or
if the first hop count is greater than the second hop count, determining, by the second node, that the node type of the second node is a second type and the node type of the third node is a first type, wherein
the first type is different from the second type.

22. The method according to claim 20, wherein the first hop count is equal to the second hop count; and
the determining, by the second node, a node type of the second node and a node type of the third node based on the first hop count and the second hop count comprises:
determining, by the second node, the node type of the second node and the node type of the third node according to a preset rule, wherein
the preset rule is related to a size of a node identity.

23. The method according to any one of claims 20 to 22, wherein before the updating, by the second node, a first hop count based on the network path probe packet, the method further comprises:
sending, by the second node, a first broadcast message, wherein the first broadcast message comprises a node identity of the second node;
receiving, by the second node, a second broadcast message from the third node, wherein the second broadcast message comprises a node identity of the third node; and
determining, by the second node, an initial node type of the second node and an initial node type of the third node based on the node identity of the second node and the node identity of the third node.

24. The method according to claim 23, wherein the determining, by the second node, an initial node type of the second node and an initial node type of the third node based on the node identity of the second node and the node identity of the third node comprises:
the node identity of the second node is less than the node identity of the third node, determining, by the second node, that the initial node type of the second node is the first type and the initial node type of the third node is the second type; or
the node identity of the second node is greater than the node identity of the third node, determining, by the second node, that the initial node type of the second node is the second type and the initial node type of the third node is the first type, wherein
the first type is different from the second type.

25. The method according to any one of claims 20 to 24, wherein the method further comprises:
an updated first hop count based on the network path probe packet is less than the first hop count before the update,
sending, by the second node, a first network path probe packet to a fourth node, wherein a hop count in the first network path probe packet is a third hop count, and a difference between the third hop count and the updated first hop count is a preset value.

26. The method according to any one of claims 20 to 25, wherein the method further comprises:
obtaining, by the second node, duration in which the node type of the second node is the first type; and
the duration is greater than preset duration, maintaining, by the second node, the node type of the second node as the first type.

27. A communication apparatus, comprising a processor, wherein
when the processor invokes a computer program or instructions in a memory, the method according to any one of claims 1 to 6, or the method according to any one of claims 7 to 16, or the method according to any one of claims 17 to 19, or the method according to any one of claims 20 to 26 is performed.

28. A communication apparatus, comprising a logic circuit and a communication interface, wherein
the communication interface is configured to receive information or send information; and
the logic circuit is configured to receive information or send information by using the communication interface, so that the method according to any one of claims 1 to 6, or the method according to any one of claims 7 to 16, or the method according to any one of claims 17 to 19, or the method according to any one of claims 20 to 26 is performed.

29. A terminal device, wherein the terminal device comprises a first node and/or a second node, wherein
the first node comprises an apparatus configured to implement the method according to any one of claims 1 to 6 or an apparatus configured to implement the method according to any one of claims 17 to 19; and
the second node comprises an apparatus configured to implement the method according to any one of claims 7 to 16 or an apparatus configured to implement the method according to any one of claims 20 to 26.

30. A computer-readable storage medium, comprising:
the computer-readable storage medium is configured to store instructions or a computer program; and when the instructions or the computer program is executed, the method according to any one of claims 1 to 6 is implemented, or the method according to any one of claims 7 to 16 is implemented, or the method according to any one of claims 17 to 19 is implemented, or the method according to any one of claims 20 to 26 is implemented.

31. A computer program product, comprising instructions or a computer program, wherein
when the instructions or the computer program is executed, the method according to any one of claims 1 to 6 is implemented, or the method according to any one of claims 7 to 16 is implemented, or the method according to any one of claims 17 to 19 is implemented, or the method according to any one of claims 20 to 26 is implemented.
